# EUROPÄISCHE PATENTSCHRIFT

(11) **EP 1 988 010 B1**
(45) Veröffentlichungstag und Bekanntmachung des Hinweises auf die Patenterteilung: **11.02.2015**
(21) Anmeldenummer: 08006121.1
(22) Anmeldetag: 28.03.2008
(51) Int. Cl.: F01N 13/12

(54) **Schiff mit Öffnungen zum Ableiten von Medien**
Ship with openings to allow media to flow away
Bateau doté d'ouvertures destinées au déchargement de supports

(30) Priorität: 04.05.2007 DE 102007020869
(43) Veröffentlichungstag der Anmeldung: 05.11.2008
(73) Patentinhaber: Blohm + Voss Shipyards GmbH, 20457 Hamburg (DE)
(72) Erfinder: Thieme, Christian, 19230 Scharbow (DE)
(74) Vertreter: Marschall, Stefan

(56) Entgegenhaltungen:
- EP-A1- 1 566 333
- WO-A1-93/07053
- DE-A1- 19 549 012

## Beschreibung

Die Erfindung bezieht sich auf ein Schiff mit Öffnungen zum Ableiten gasförmiger und/oder flüssiger Medien, insbesondere Abgase, im Unterwasserbereich einer Schiffswandung eines Schiffskörpers, über durch Außenströmungen erzeugte Absaugwirkung.

Es ist bekannt, die Außenströmung zur Absaugwirkung von Öffnungen in Schiffswandungen heranzuziehen. Es wird dabei ein an der Schiffswandung im Unterwasserbereich angeordnetes üblicherweise muschelförmiges Schild mit einer Öffnung entgegen der Fahrtrichtung eingesetzt, das eine Strömung beeinflußt und durch die Wirkung einer abgelenkten Außenströmung die Austrittsströmung mitgerissen wird. Hierbei besteht der Mangel, daß durch die starre Ausbildung eine Wirkung ausschließlich von der Geschwindigkeit der Außenströmung abhängig und somit häufig nicht effizient ist. Bei einer bezüglich des auftretenden Widerstandes akzeptabler Ausbildung bzw. Formgebung ist die absaugende Wirkung bei niedrigen Geschwindigkeiten relativ gering und bei hohen Geschwindigkeiten zu hoch.

Es ist gemäß der EP 1 566 333 A1 eine Anordnung zur Ableitung von Medien im Unterwasserbereich bekannt geworden, wobei eine in der Schiffswandung liegenden Austrittsöffnung teilweise durch einen feststehenden profilierten Abweiser abgedeckt ist.

Ferner ist nach der DE 195 49 012 A1 ebenfalls ein in der Schiffswandung liegender Austritt zur Ableitung bekannt geworden, wobei ein Strömungskörper an der Austrittsöffnung in der Außensteuerung derart feststehend zugeordnet und geformt ist, daß eine beidseitige Umströmung des Strömungskörpers gewährleistet ist und ein Unterdruck erzeugbar ist.

Eine weitere Anordnung zur Ableitung von Medien im Unterwasserbereich mit allen Merkmalen des Oberbegriffs des Anspruchs 1 ist durch WO93/07053 bekannt.

Die Aufgabe der Erfindung ist eine gattungsgemäße Anordnung zu schaffen und bekannte Vorrichtungen derart auf einfache Weise zu verbessern, daß eine an die Geschwindigkeit der Außen- bzw. Ausströmung Anpassung ermöglicht wird und eine gleichmäßige Absaugwirkung über einen großen Geschwindigkeitsbereich widerstandsgünstig gewährleistet ist.

Die Lösung dieser Aufgabe erfolgt erfindungsgemäß dadurch, daß eine Kanalausbildung mit der Öffnung über die Schiffswandung hinaus nach außen geführt ist und einen Anstellwinkel gegenüber der Fahrtrichtung des Schiffes aufweist, wobei mindestens im Anströmbereich der Kanalausbildung ein Strömungsführungselement ausgehend von der Schiffswandung angeordnet ist und das Strömungsführungselement einen zugeordneten integrierbaren Strömungskörper besitzt, der über Stellmittel zur Erhöhung der Absaugwirkung im Winkel nach außen anstellbar und/oder zur Umströmung und Kanalbildung im Abstand zum Strömungsführungselement einstellbar ist.

Hierdurch ist es möglich, unterschiedliche Geschwindigkeiten zu berücksichtigen und eine relativ konstante Absaugwirkung einzustellen.

Weiterhin wird zur unbeeinflußten Anordnung durch Änderungen der statischen Druckhöhe infolge von Wellen oder Schiffskränkungen vorgeschlagen, daß die Kanalausbildung mit der Öffnung im Mitschiffs -oder Heckbereich des Schiffes angeordnet ist.

Um die Bedingungen ohne wesentliche Außenströmung und ohne absaugende Wirkung zu berücksichtigen, wird vorgeschlagen, daß die Kanalausbildung mit einer Verbindungsleitung eines kommunizierenden Überwasseraustritts verbunden ist und die sich einstellenden Druckverhältnisse an den Austritten sich in Abhängigkeit der Außenströmung ein Über- und/oder Unterwasseraustritt einstellt.

In der Zeichnung ist ein Ausführungsbeispiel der Erfindung schematisch dargestellt. Es zeigen:

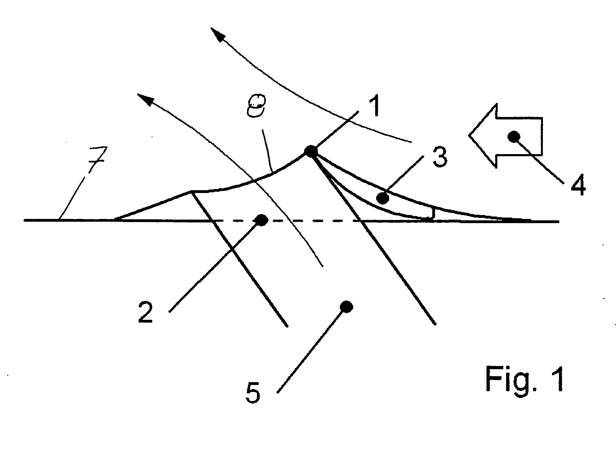

- Fig. 1: eine Anordnung in einer widerstandsgünstigen Ausgangsstellung mit geringer Impulsänderung;
- Fig. 2: eine Anordnung gemäß Fig. 1 mit einem in Abstand angeordneten Strömungskörper und hoher Impulsänderung und
- Fig. 3: eine Anordnung gemäß Fig. 1 und im Winkel angestellten Strömungskörper und hohe Impulsänderung.

Bei der dargestellten Anordnung ist eine Kanalausbildung 5 mit einer Öffnung 8 über eine Schiffswandung 7 hinausgeführt und in einen Anstellwinkel entgegen der Fahrtrichtung angeordnet. Im Anströmbereich ist die Kanalausbildung 5 ausgehend von der Schiffswandung 7 mit einem Strömungsführungselement 1 ausgestattet. In der Grundstellung ist im Strömungsführungselement 1 ein Strömungskörper 3 integriert.

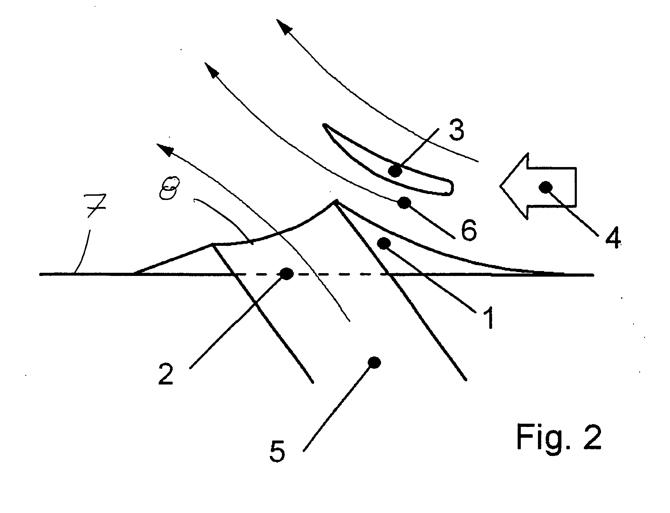

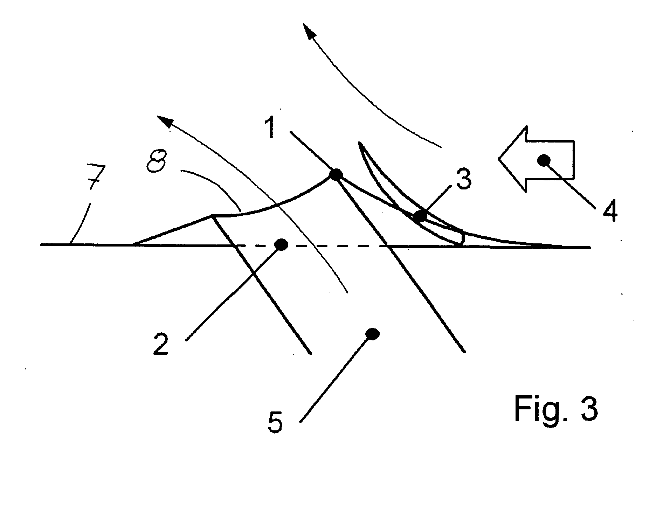

Den Strömungskörper 3 ist dabei über nicht näher dargestellte Stellelemente im Winkel verschwenkbarer (Fig. 3) bzw. in einem Abstand zum Strömungsführungselement 1 (Fig. 2) einstellbar, um eine Impulsänderung zu erzielen. Hierdurch ist eine Wechselwirkung mit einer Außen- bzw. Ausströmung 4 und damit die Absaugwirkung der Öffnung 8 einstellbar.

Die Wirkung auf die Druckverteilung im Austrittskanal ist von der Impulsänderung der Außenströmung abhängig. Diese wird bei hohen Geschwindigkeiten durch eine widerstandsgünstige flache Formgebung des Strömungsführungselementes 1 mit der Integration des Strömungskörpers 3 erreicht. Durch die hohe kinetische Energie der Außenströmung 4 ist die gewünschte Absaugwirkung ausreichend. Bei niedrigen Außenströmungen wird die gewünschte Impulsänderung bzw. die Absaugwirkung durch eine steilere, weiter über die Schiffswandung hinausragende Formgebung durch Verschwenken bzw. Ausfahren des beabstandeten Strömungskörpers 3 erreicht. Dabei ist die Wirkung des Strömungsköpers 3 effizienter, wenn dieser auch eine Saugseitenströmung 6 aufweist. Die möglichst gleichmäßige Absaugung der Öffnung 7 über einen weiten Geschwindigkeitsbereich ist nicht nur von dem durch die Vorrichtung erzeugten relativen Druck, sondern auch vom Absolutdruck, insbesondere von der statischen Wasserhöhe am Ort des Austritts, abhängig. Für eine optimale Auslegung der Vorrichtung ist es somit wichtig, für den Austritt einen Ort mit möglichst geringer stationärer Wasserspiegelhöhe bzw. möglichst geringen Änderungen der Wasserspiegelhöhen bei Fahrt und Seegang, vorzugsweise achtern im Mittschiffsbereich, zu wählen. Da ohne Fahrt bzw. ohne Außenströmung die Vorrichtung keine absaugende Wirkung hat, ist es sinnvoll, einen Unterwasseraustritt 8 mit einem Überwasseraustritt zu verbinden bzw. zu kombinieren.

Durch eine derartige verstellbare Anordnung ist es somit ohne Einbauten in den Zuführungen möglich, je nach Einsatzbedingung die Austrittsströmung der Öffnungen 8 zu regeln. So ist es möglich, im Hafenbetrieb oder bei kleiner Fahrt den Gegendruck durch die statische Wasserhöhe quasi als verschluß zu nutzen, wodurch bei entsprechender Auslegung die Strömung Überwasser austritt. Bei mittlerer Fahrt bzw. Außengeschwindigkeit kann durch Einstellen der vollen Absaugwirkung, durch Ausfahren des Strömungskörpers 3 der Austrittsvolumenstrom angepaßt werden. Bei voller Fahrt bzw. Außengeschwindigkeit nimmt die Absaugwirkung weiter zu, die Verstellung des Strömungskörpers 3 wird zurückgenommen und ein möglichst geringer widerstand realisiert. Bei entsprechender Auslegung ist es zudem möglich, daß durch die Absaugung Unterwasser zusätzliche Außenluft über den Überwasseraustritt eingesaugt und damit das Abgas gekühlt wird.

## Patentansprüche

1. Schiff mit Öffnungen zum Ableiten gasförmiger und/oder flüssiger Medien, insbesondere Abgase, im Unterwasserbereich einer Schiffswandung eines Schiffskörpers, über durch Außenströmungen erzeugte Absaugwirkung, wobei eine Kanalausbildung (5) mit der Öffnung (8) über die Schiffswandung (7) hinaus nach außen geführt ist und einen Anstellwinkel gegenüber der Fahrtrichtung des Schiffes aufweist, wobei mindestens im Anströmbereich der Kanalausbildung (5) ein Strömungsführungselement (1) ausgehend von der Schiffswandung (7) angeordnet ist und das Strömungsführungselement (1) einen zugeordneten integrierbaren Strömungskörper (3) besitzt, **dadurch gekennzeichnet, dass** der Strömungskörperder über Stellmittel zur Erhöhung der Absaugwirkung im Winkel nach außen anstellbar und/oder zur Umströmung und Kanalbildung (6) im Abstand zum Strömungsführungselement (1) einstellbar ist.

2. Schiff nach Anspruch 1, **dadurch gekennzeichnet, daß** die Kanalausbildung (5) mit der Öffnung (8) im Mitschiffs -oder Heckbereich des Schiffes angeordnet ist.

## Claims

1. A device for ships with openings for purposes of conducting away gaseous and/or liquid media, in particular exhaust gases, in the underwater region of a wall of a ship's hull, by means of a suction action generated by external flows, **characterised in that**, a channel development (5) with the opening (8) is led outward via the ship's wall (7), and has an angle of incidence relative to the direction of travel of the ship, wherein a flow guidance element (1) starting from the ship's wall (7) is arranged at least in the incident flow region of the channel development (5), and the flow guidance element (1) possesses an associated integrable flow element (3), which, by means of positioning agents, can be adjusted outward in its angle of incidence for purposes of increasing the suction action, and/or can be set at a distance from the flow guidance element (1) for purposes of circulation and channelling (6).

2. The device in accordance with Claim 1, **characterised in that**, the channel development (5), with the opening (8), is arranged amidships, or in the stern region of the ship.

## Revendications

1. Dispositif pour bateaux, comportant des ouvertures pour évacuer des fluides gazeux et/ou liquides, en particulier des gaz d'échappement, dans la partie immergée d'une paroi de bateau d'un corps de bateau, par un effet d'aspiration généré par des écoulements extérieurs, **caractérisé en ce qu'**une formation de canal (5) est guidée vers l'extérieur avec l'ouverture (8) au-delà de la paroi de bateau (7) et présente un angle d'approche par rapport au sens de déplacement du bateau, un élément de guidage d'écoulement (1) étant disposé en partant de la paroi du bateau (7) au moins dans la zone d'afflux de la formation de canal (5) et que l'élément de guidage d'écoulement (1) présente un corps d'écoulement intégrable associé (3) qui est réglable vers l'extérieur à l'aide de moyens de réglage pour augmenter l'effet d'aspiration dans l'angle et/ou pour dévier le flux et former un canal (6) dans l'intervalle avec l'élément de guidage d'écoulement (1).

2. Dispositif selon la revendication 1, **caractérisé en ce que** la formation de canal (15) est disposée avec l'ouverture (8) dans la partie centrale ou arrière du bateau.
